# EUROPEAN PATENT SPECIFICATION

(11) **EP 3 059 697 B1**
(45) Date of publication and mention of the grant of the patent: **16.05.2018**
(21) Application number: 16150067.3
(22) Date of filing: 04.01.2016
(51) Int. Cl.: G06K 19/07, G06K 7/10

(54) **SMART OPTICAL TAG**
INTELLIGENTES OPTISCHES ETIKETT
ÉTIQUETTE OPTIQUE INTELLIGENT

(30) Priority: 19.02.2015 SI 201500036
(43) Date of publication of application: 24.08.2016
(73) Proprietor: Margento R&D d.o.o, 2000 Maribor (SI)
(72) Inventor: Chowdhury, Amor, 2351 Kamnica (SI); Igrec, Dalibor, 2000 Maribor (SI)
(74) Representative: Becker Kurig Straus

(56) References cited:
- US-A- 4 978 840
- US-A- 5 354 979
- US-A1- 2014 097 238

## Description

The subject of this invention is a »smart optical tag«, which is intended for optical identification of a product, person or an animal, and which is based on optical technology of automatic recognition of saved data or safe two-way communication of the optical tag with a smart mobile device.

The technical problem, solved by the invention, is the design of a device enabling safe optical one-way or two-way communication using smart mobile device's camera or flash, with no external or internal own power supply of the tag. Due to such design, the entire structure is compact, simple, affordable and insensitive to certain external influences.

Some similar solutions exist, but none enables two-way safe optical data transfer using smart mobile device's camera or flash and simultaneous charging of the smart optical tag using the light of the flash. One solution is patented under no. US 20 14 02 03 073 A1, but it requires its own power supply (battery), as it functions in the active tag mode. It also functions in the conventional tag identification mode and does not support two-way communication. Another solution is patented under no. US 76 52 557 B2, but it also does not support two-way communication.

Aside from the two abovementioned, patents nos. US 71 90 907 B2, US 67 52 837 B2 and WO 19 97 00 74 79 A1 also include well-known solutions. US 5 354 979 A discloses a device for storing data, comprising a non-volatile memory and a photoelectric transducer receptive of light, wherein the device reads data out of the memory and displays the data responsive to an electric signal. US 2014/0097238 A1 uses a calibration pattern for calibrated measurements.

The common property of all the mentioned solutions is conventional identification of a product, person or an animal, which functions in a similar way as RFID tags, except that these solutions use light as the medium for data transfer. They also mostly need their own power supply and do not support two-way communication.

According to the invention there is provided a smart optical tag according to claim 1 . This invention solves the abovementioned shortcomings using an electrical energy container, placed inside the tag. This electrical energy container is charged immediately when light appears at the receiver part of the tag. The light in this way serves two purposes: it is an energy source for tag's own power supply during data transfer, and at the same time a data transfer medium. In most cases the products which have the relevant tag from this invention installed will be placed in bright rooms, so that the tag's electrical energy container will already be full and ready for communication. Otherwise, when the electrical energy containers are empty (the product tag is in a dark room), the tag's processing unit is powered by light that is transferring the data, and the electrical energy container is simultaneously charged. The second key characteristic is safe two-way communication between the tag and the smart mobile device. This enables safe information transfer, as security keys can be safely exchanged before data transfer is established. Beside the mentioned advantage of safe connection, two-way communication also brings new possibilities and expands the functionality of the device to a higher level. This means that the tag can be used for other purposes which require safe wireless connection between two devices without their own power supply, and not only as conventional identification of a product, person or an animal. An additional advantage of the invention is the use of the tag with the help of existing technology, which is nowadays widely spread in everyday tasks; i.e. smart mobile device with in-built camera and flash. The presented device is not sensitive to radio-frequency interference or sound noise, which is another advantage over similar tags, operating in the field of RFID communication or sound communication.

RFID system consists of a reader transmitting electromagnetic waves and a RFID tag receiving the reader's signal and responds with the requested data through electromagnetic waves. The data can be any information entered in the tag or the request of the reader to enter information in the RFID tag. Depending on the power source RFID tags can be active or passive. RFID technology thus enables wireless and contactless data transfer between the RFID tag and the RFID reader. The transfer medium in RFID technology are radio waves and not light, which is the key difference in comparison with the smart optical tag presented by this invention. The RFID system has proven to be extremely useful, which leads us to believe that the proposed invention has the same potential for success. The tag system is currently used in different fields of industry (automatic tracking, product and stock identification and management) as well as outside of industrial environments (automatic tracking and registration of different goods, products, persons and animals).

The invention is described in more detail with the help of a figure:

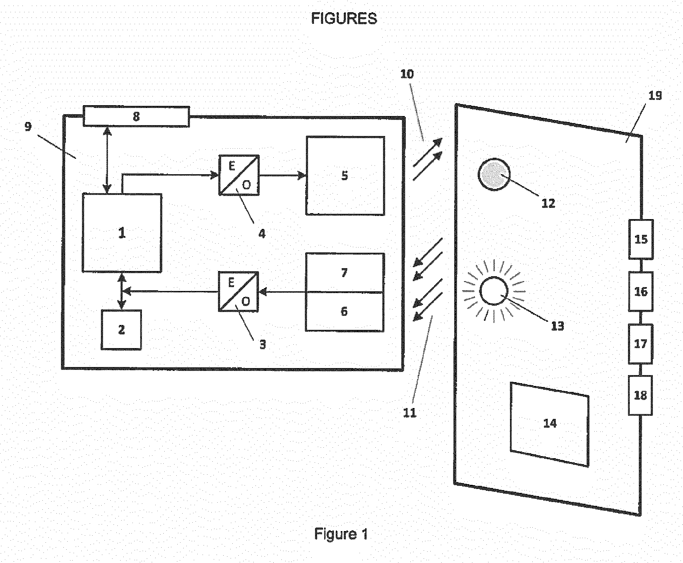

Figure 1 is a schematic presentation of the basic components of a smart optical tag with the added smart mobile device with which two-way communication takes place using the device's camera and flash.

Smart optical tag is enclosed in an air-tight housing 9. Two interactive interfaces are installed on the air-tight housing: the transmitting part 5 and the light-receiving parts 6 and 7, which are joined into the optical receiver. Smart optical tag is equipped with an electrical communication interface 8, which enables smart communication with external devices, such as measuring sensors, other smart devices, control actuators, etc. All other components of the smart optical tag are not visible on the outside. The basic part inside the air-tight housing 9 is the processing unit 1, which includes all the necessary processing logics needed for the operation of the smart optical tag.

The power supply of the processing unit 1 is provided by the electrical converter 3, which converts the received light energy 11 at the light-optical input 6 into electrical energy. This is then used for powering the processing unit 1 and simultaneous charging of the electrical energy container 2. The electrical energy container 2 takes care of voltage stabilization or adaptation of power voltage of the processing unit 1 during communication, as the voltage changes with received light modulation.

The data receiver part is the light-optical input 7, which provides the information in the form of light 11 to the optical-electrical converter 3, which changes it into electrical signal and sends it as such to the processing unit's 1 input.

The data transmitting part is the light-optical output 5, where in the electrical-optical converter 4 the information in the form of an electrical signal, generated by the processing unit 1, is converted and modulated into light, externally visible as 10.

To use the smart optical tag 9, a mobile application 14 operating on a smart mobile device 19 is needed. The operation of the mobile application requires access to the camera 12 and the flash 13 of the smart mobile device 19, or to a suitable optical-electrical converter, which can either be an integral part of the smart mobile device 19 or can be connected to the latter through any communication interface, such as USB 15 RS232 16, IR 17, audio socket 18 etc. The camera 12 captures the information, acquired with the transmitted light 10 of the smart optical tag. The mobile application 14 uses the flash 13 to recharge the electrical energy container 2 and to simultaneously generate or modulate the desired information, which is transmitted via the generated light 11.

## Claims

1. Smart optical tag, comprising
an air-tight housing (9);
a processing unit (1), which is simultaneously powered by an electrical energy container (2) and the voltage converted from an optical input (6) using an optical-electrical converter (3);
wherein the tag receives first data via a light-optical input (7), wherein the first data are converted from a light signal (11) into an electrical signal in the optical-electrical converter (3);
wherein the tag transmits second data via a light-optical output (5), wherein the second data are converted into a light signal (10) in an electrical-optical converter (4); **characterized in that** the tag further comprises an electrical communication interface (8) which enables communication with external devices; wherein the smart optical tag is adapted to additionally capture and save information from peripheral measuring-sensor elements through the electrical communication interface (8).

2. Smart optical tag according to claim 1,
wherein the tag uses optical communication for its operation, where simultaneous absorption of light energy and conversion into electrical energy takes place.

3. Smart optical tag according to claim 1,
wherein the tag converts the received light signal (11) into electrical energy in the optical-electrical converter (3), which simultaneously recharges the electrical energy container (2), such that the tag does not require an external power source for operation.

4. Smart optical tag according to claim 3,
wherein the electrical energy container (2) serves for stabilisation and/or adaptation of the power voltage (1) during communication.

5. Smart optical tag according to claim 1,
wherein the tag can communicate with any device which includes a suitable receiving/transmitting optical-electrical interface.

6. Smart optical tag according to claim 1,
wherein the tag uses encoded or encrypted two-way communication with a smart mobile device (19).

7. Smart optical tag according to claim 1,
wherein the tag can additionally capture and save information from peripheral measuring-sensor elements through the light-optical input (7).

## Patentansprüche

1. Intelligentes optisches Etikett, umfassend
ein luftdichtes Gehäuse (9);
eine Verarbeitungseinheit (1), die durch einen Speicher (2) elektrischer Energie und die Spannung, die von einem optischen Eingang (6) unter Verwendung eines optisch-elektrischen Wandlers (3) umgewandelt wird, gleichzeitig mit Energie versorgt wird; wobei das Etikett erste Daten über einen lichtoptischen Eingang (7) empfängt, wobei die ersten Daten in dem optisch-elektrischen Wandler (3) von einem ersten Lichtsignal (11) in ein elektrisches Signal umgewandelt werden;
wobei das Etikett zweite Daten über einen lichtoptischen Ausgang (5) sendet, wobei die zweiten Daten in einem elektrisch-optischen Wandler (4) in ein Lichtsignal (10) umgewandelt werden;
**dadurch gekennzeichnet, dass** das Etikett ferner eine elektrische Kommunikationsschnittstelle (8) umfasst, die eine Kommunikation mit externen Vorrichtungen ermöglicht; wobei das intelligente optische Etikett dafür ausgelegt ist, über die elektrische Kommunikationsschnittstelle (8) zusätzlich Informationen von peripheren Messsensorelementen zu erfassen und zu speichern.

2. Intelligentes optisches Etikett nach Anspruch 1,
wobei das Etikett für seinen Betrieb eine optische Kommunikation verwendet, wobei eine gleichzeitige Absorption von Lichtenergie und Umwandlung in elektrische Energie stattfindet.

3. Intelligentes optisches Etikett nach Anspruch 1,
wobei das Etikett das empfangene Lichtsignal (11) in dem optisch-elektrischen Wandler (3) in elektrische Energie umwandelt, die gleichzeitig den Speicher (2) elektrischer Energie lädt, sodass das Etikett zum Betrieb keine externe Energieversorgung erfordert.

4. Intelligentes optisches Etikett nach Anspruch 3,
wobei der Speicher (2) elektrischer Energie zur Stabilisierung und/oder Anpassung der Versorgungsspannung (1) während der Kommunikation dient.

5. Intelligentes optisches Etikett nach Anspruch 1,
wobei das Etikett mit einer beliebigen Vorrichtung kommunizieren kann, die eine geeignete empfangende/sendende optisch-elektrische Schnittstelle beinhaltet.

6. Intelligentes optisches Etikett nach Anspruch 1,
wobei das Etikett eine codierte oder verschlüsselte bidirektionale Kommunikation mit einer intelligenten mobilen Vorrichtung (19) verwendet.

7. Intelligentes optisches Etikett nach Anspruch 1,
wobei das Etikett über den lichtoptischen Eingang (7) zusätzlich Informationen von peripheren Messsensorelementen erfassen und speichern kann.

## Revendications

1. Etiquette optique intelligente, comprenant
un boîtier étanche à l'air (9) ;
une unité de traitement (1) simultanément alimentée par un conteneur d'énergie électrique (2) et la tension convertie d'une entrée optique (6) en utilisant un convertisseur optique-électrique (3) ; dans laquelle l'étiquette reçoit des premières données via une entrée de lumière optique (7), dans laquelle les premières données sont converties d'un signal lumineux (11) en un signal électrique dans le convertisseur optique-électrique (3) ;
dans laquelle l'étiquette transmet des deuxièmes données via une sortie de lumière optique (5), dans laquelle les deuxièmes données sont converties en un signal lumineux (10) dans un convertisseur électrique-optique (4) ;
**caractérisée en ce que** l'étiquette comprend en outre une interface de communication électrique (8) qui permet la communication avec des dispositifs externes ; dans laquelle l'étiquette optique intelligente est adaptée pour additionnellement capturer et sauvegarder de l'information d'éléments périphériques de capteurs de mesure via l'interface de communication électrique (8).

2. Etiquette optique intelligente selon la revendication 1,
dans laquelle, pour son fonctionnement, l'étiquette utilise une communication optique où une absorption d'énergie lumineuse et une conversion en énergie électrique ont lieu simultanément.

3. Etiquette optique intelligente selon la revendication 1,
dans laquelle l'étiquette convertit le signal lumineux (11) reçu en énergie électrique dans le convertisseur optique-électrique (3) qui recharge simultanément le conteneur d'énergie électrique (2), de sorte que l'étiquette ne nécessite pas une source d'alimentation externe pour le fonctionnement.

4. Etiquette optique intelligente selon la revendication 3,
dans laquelle le conteneur d'énergie électrique (2) sert à la stabilisation et/ou l'adaptation de la tension d'alimentation (1) pendant la communication.

5. Etiquette optique intelligente selon la revendication 1,
dans laquelle l'étiquette peut communiquer avec n'importe quel dispositif qui comprend une interface optique-électrique d'émission/réception appropriée.

6. Etiquette optique intelligente selon la revendication 1,
dans laquelle l'étiquette utilise une communication bidirectionnelle codée ou cryptée avec un dispositif mobile intelligent (19).

7. Etiquette optique intelligente selon la revendication 1,
dans laquelle l'étiquette peut additionnellement capturer et sauvegarder de l'information d'éléments périphériques de capteurs de mesure via l'entrée de lumière optique (7).
